# EUROPEAN PATENT SPECIFICATION

(11) **EP 0 542 732 B1**
(45) Date of publication and mention of the grant of the patent: **05.07.1995**
(21) Application number: 93300850.0
(22) Date of filing: 08.05.1989
(51) Int. Cl.: F16L 55/165

(54) **Pipelines**
Pipelines
Pipelines

(30) Priority: 09.05.1988 GB 8810894
(43) Date of publication of application: 19.05.1993
(62) Divisional of application: 89304598.9
(73) Proprietor: British Gas plc, London SW1V 3JL (GB)
(72) Inventor: McGuire, Brian Edward, Shaw, Oldham OL2 7RW (GB)
(74) Representative: Morgan, David James

(56) References cited:
- GB-A- 807 413
- GB-A- 2 186 340
- US-A- 3 462 825

## Description

This invention relates to a method for the lining of existing pipes. The invention will be described in relation to gas, oil and water supply pipes, but it will be appreciated that the invention is applicable to pipes of all kinds.

When lining pipes (which pipes when ground embedded are prone to crack due to ground movement) it is known to draw a heated liner of plastic tube through a die to reduce the diameter and then into a length of the existing pipe.

The present invention relates to an improved method of lining installed pipework when using a swaging die to reduce the diameter of the liner pipe prior to its being drawn into the existing pipework. By "installed" pipework is meant pipework that has already been installed in position to carry out its intended purpose, such as for example, ground embedded pipework for gas, oil water or sewage, pipework forming part of a larger installation such as in oil or gas refinery or storage installation, or pipework resting on the ground and laid down to connect a source of supply to the recipient such as an oil pipe connecting a well to a refinery or port.

In the case of ground embedded pipework it will be appreciated that the normal arrangement when such a process is being carried out will involve a winch adjacent to an excavation at one end of a length of pipe to be lined, whence a cable or similar flexible ligament passes through the length of pipe to a second excavation beyond which it is attached to the front end of a liner pipe of plastics material. Adjacent to the second excavation is a tube heating and compressing apparatus which has a heater and a size reduction die. At a downstream end of this apparatus there may be a reciprocatable "pusher" which can grip the pipe and draw it from the apparatus and urge it towards the pipe to be lined.

GB-A-807413 describes a process for lining metal pipes with a thermoplastic resin, in particular polyvinyl chloride, in which the liner, which has an external diameter greater than the internal diameter of the metal pipe is heated to a temperature at which the liner pipe undergoes deformation, is then drawn through a die which reduces the external diameter of the liner pipe to below the internal diameter of the metal pipe, is cooled to set the deformation and is then introduced into the metal pipe which is then heated to heat the liner pipe to a temperature where the deformation is removed and the liner pipe reverts to its original diameter to form a tight lining in the metal pipe.

US-A-346285 relates to a method for lining steel tubes with a fluorocarbon lining tube, the method comprising drawing at ambient temperature the lining tube through a die attached to the end of the steel tube and selected so that the external diameter of the lining tube, which is initially greater than the internal diameter of the steel tube, is reduced to a dimension less than that of the internal diameter of the steel tube, drawing the reduced diameter lining tube into the steel tube and allowing the external diameter of the tube to revert to its original dimension so that the lining tube forms a tight fit with the steel tube.

According to the present invention, there is provided a method of lining installed pipework which includes the steps of taking a length of liner pipe made from a memory retaining plastics material of external diameter greater than the internal diameter of the pipework to be lined and using pulling means under tension attached to the leading end of the liner pipe and threaded through the pipework, drawing the liner pipe through a swaging die to reduce the external diameter of the liner pipe by up to 15%, preheating the liner pipe before it emerges from the die, drawing the liner pipe through the installed pipework with its outer diameter reduced to and/or maintained at a dimension less than that of the inner diameter of the installed pipework and thereafter allowing the liner pipe to expand within the pipework by relaxation of the said tension followed by memory induced expansion at ordinary atmospheric pressure and at the ambient temperature of the pipework, the tension applied by the pulling means being such as partially to restrain the radial expansion of the outer surface of the liner pipe after its emergence from the die, the die being attached to but spaced from the pipework and the liner pipe being cooled within the space between the die and the pipework as the liner pipe emerges from the die.

In one aspect of the present invention, the liner pipe may be heated by methods known per se prior to the swaging operation. Alternatively, or in addition, the liner pipe may also be heated during its passage through the swaging die. In such a case, means are provided for heating the internal surface of the swaging die simultaneously with the passage of the liner pipe through it.

The present invention envisages in a preferred aspect of its operation the employment of a swaging die that is provided with a surface which, or part of which, is inclined at an angle between 6 degrees and 32 degrees there being no part at an angle of more than 32 degrees to the die axis and which extends over an axial length that is a least 70% of the axial distance between the part where the liner pipe engages with such surface and the part where the liner pipe disengages from the die.

Dies used according to the prior art methods of pipe swaging as employed in practice have comprised two portions, the first being the inclined swaging surface reducing in diameter to a minimum value and the second being an axial continuation of the die interior having its walls parallel to the die axis and an internal diameter equal to such minimum value. We have found that in the carrying out of the present invention, it is advantageous to reduce the axial length of the said second portion relative to the axial length of the first portion, or else to dispense with the second portion altogether. In particular, by so designing the die that the first part extends over an axial distance that is at least 70%, and preferably over 80%, and advantageously over 85% of the axial distance between the part where the liner pipe engages with the inclined surface and the outlet orifice where the pipe emerges from the die, the pulling tension required to swage the liner pipe is substantially decreased. Another consequence of the use of such a die in the carrying out of the present invention is that, when using a liner pipe of synthetic hydrocarbon resins such as polyethylene or modified polyethylene as conventionally used in practice, the liner pipe on emerging from such outlet orifice manifests a greater tendency towards radial expansion relative to the degree of swaging exerted by the die than in the case where, as in the prior art, the swaging die was provided with a second portion as mentioned above of substantial length, typically in the order of 50% of the overall die length. On release of pulling tension such tendency will result in a greater proportional radial expansion in relation to the pulling tension employed than would have occurred using the prior art dies.

The process of the present invention relies both upon the expansion of the liner pipe within the pipework as a result of relaxation of the pulling tension and also as a result of the memory induced expansion of the swaged liner pipe. By the use of a die having a reduced axial length of its second portion relative to the axial length of its first portion as mentioned above the proportionate expansion resulting from the relaxation of the pulling tension may be significantly increased thus resulting in improved control over the pipe lining operation.

The arrangements described above furthermore provide a significant advantage in relation to the case where a "pusher" device as e.g. of the kind described in our copending Patent Application GB-A-2215804 is used. It is inherent in the operation of such a pusher that, when it grips the liner pipe and urges it towards the pipework to be lined, there is experienced a temporary reduction in the pulling tension exerted by the pulling device (such as a winch) at the far end of the pipework. Upon the pusher releasing its grip, the tension resorts back to its original value. In practice, this results in a continuous fluctuation in the tension. It is desirable that the changeover between maximum and minimum tensions in the course of the fluctuations be affected as smoothly as possible and with the minimum amount of sharp transitions or jerks.

We have found that as a result of the preferred use of the dies of the present invention which require substantially lower pulling tensions to effect a comparable degree of swaging as compared with prior art dies and which furthermore bring about a greater "springback" tendency on the part of the pipe emerging from the die orifice, the amplitudes of the fluctuations are reduced and the fluctuations themselves become smoother. Having regard to the very high forces involved in exerting the pulling tension, this again constitutes a significant improvement in both the safety and the efficiency of the operations.

The length of the pipework which may be lined in a single operation by the method of this invention may typically be from 10 metres upwards. The limiting length of pipework which may be lined in any particular case will depend upon a combination of factors including the friction resistance to the movement of the liner within the pipework, the extent to which the liner pipe with reduced diameter after insertion into the pipework becomes subject to deformation (a problem encountered with larger diameter liner pipes of relatively large SDR ratio), the limiting tension on the leading end of the liner pipe beyond which it may suffer permanent damage or elongation, the capacity of the mechanism (such as a winch) operating the pulling means and the uniformity of diameter and/or direction or otherwise of the pipework interior. The most suitable practicable length to be lined in any particular case can readily be ascertained by trial and error. By the method of the present invention, it becomes possible to line lengths of pipework up to 450 metres or more. The surface finish of the die may be provided by means known in the art. It is preferred that such surface finish should be at least down to N7 typically down to N6 preferably down to N5 and ideally in the order of N4 or lower.

It has been found advantageous to employ a die having a relatively shallow angle of inclination of the inclined surface of the die to the die axis and within the range of 12 degrees to 29 degrees and preferably from 20 degrees to 25 degrees. Reduction of the angle assists in reducing the pulling load required to effect compression of the liner pipe but at the same time increases the area of the swaging surface for any given degree of compression. The optimum angle will be that which, in any particular case, minimises the overall disadvantages of a highload to bring about compression on the one hand and a large friction inducing die surface area on the other hand. The die surface may be frusto conical in shape. Alternatively, it may have a variable angle of inclination to the die axis within the above stated limits. It is a significant and advantageous feature of the present invention that when using a liner pipe made of a deformable memory retaining material in accordance with the method of the invention, the liner pipe may be left to expand radially within the lined pipework and under the influence of the memory of the material constituting it. By suitable choice of initial diameter of the liner pipe, degree of compression during the swaging operation and die orifice diameter in relation to the internal diameter of the pipework to be lined, the present invention can bring about the provision of a close fitting lining to the pipework resulting, (following relaxation of tension), from the memory induced expansion of the pipelining at the ambient temperatures and pressure within the pipework. It is unnecessary to have recourse to the means provided by the prior art for expanding the pipe lining within the pipework such as the application of internal super atmospheric pressure or the application of heat to the pipelining from within or the initial application of very high stretching forces to the pipelining to bring about an initial reduction in its diameter prior to insertion into the pipework. The precise operating conditions employed in order to carry out the method of the present invention will depend upon the several factors referred to above in any particular case and will vary according to the pipework internal diameter and the purpose for which it is put to use (for example whether for water or gas), the material of the pipelining and the SDR of the pipelining. (By SDR is meant the ratio of the diameter of the pipelining before swaging to its wall thickness).

A preferred material for the liner pipe is polyethylene, but other materials having the necessary memory retaining characteristics, such as a co-polymer of ethylene and at least one alphaolefin of up to ten carbon atoms may equally be used. Although the reduction in diameter of the liner pipe during passage through the swaging die may be up to 15%, reductions in the range 5.0% to 9.8% are preferred. The reduction should be such as to allow drawing of the liner pipe through the existing pipe. This somewhat simple requirement is complicated by the fact that existing pipes are often not accurately sized internally, that the internal diameter may vary along the length of the pipe, and that the rate of recovery of the liner pipe may vary with ambient conditions and with the material from which the pipe is made. The wall thickness of the liner pipe should be as thin as possible consistent with the use to which the pipe is to be put and the requirement to provide adequate internal sealing of the existing pipe. A ratio of wall thickness to diameter of the liner pipe in the range 10 to 46 is preferred.

The maximum tension chosen for pulling the liner pipe through the existing pipe should advantageously be in the range 45% to 55% of the yield strength of the liner pipe in question, and in particular about 50%. The ratio of the throat diameter of the die to the diameter of the existing pipe should advantageously be in the range 1.05:1 to 1.15:1. A reciprocatable pusher may be employed to augment the tension exerted by the said pulling means to draw the liner pipe through the swaging die.

In order that the invention may be more clearly understood one embodiment of the invention will now be described by way of example, with reference to the accompanying drawings, in which:-
Figure 1 is a side elevational view in section of one form of apparatus used in the method according to the invention, and
Figure 2 is a side elevational view in section of a modification of the apparatus shown in Figure 1.

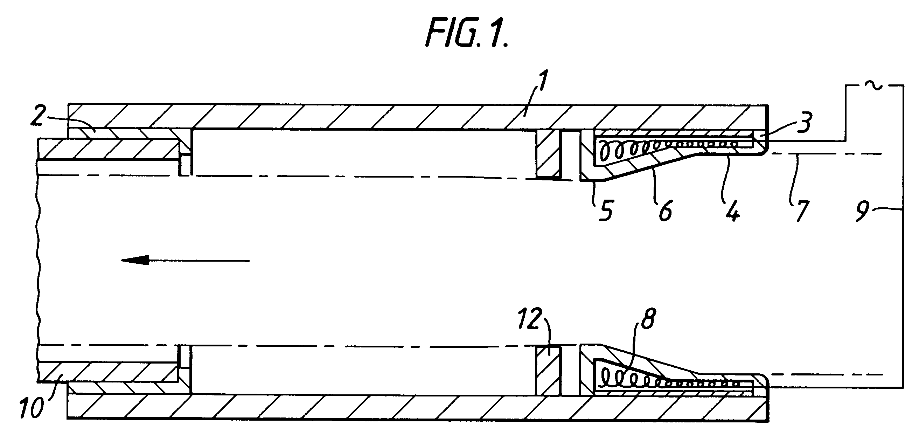

Referring to Figure 1, the apparatus comprises a supporting structure 1 which incorporates a pipe clamp 2 at one end and a swaging die 3 at the other. The swaging die 3 is generally cylindrical and comprises a section of larger diameter 4 joined to a section of smaller diameter 5 by a conical section 6. The swaging die has a polished swaging surface which is inclined at an angle of between 6 degrees and 32 degrees to the axis of the die advantageously between 12 degrees to 29 degrees and preferably between 20 degrees to 25 degrees. The polish is at least down to N7, typically down to N6 preferably down to N5 and ideally in the order of N4 or lower. The ratio between the diameters at 4 and 5 is preferably in the range 1.05:1 to 1.15:1. This has been found to provide an adequate level of clearance between pipe liner and internal pipe diameter for most normal pipes and to be comfortably within the diametric dimensional recovery of the material.

The body of the die 3 in the embodiment illustrated is hollow and houses an electrical heating coil 8 which is supplied with electricity via an electrical supply circuit 9. Power supply to the heating coil is applied to heat the liner pipe to a temperature within the range 35 degrees centigrade to 95 degrees centigrade and preferably to about 50 degrees centigrade. On leaving the die, the swaged liner pipe is cooled by means of an annular heat exchanger 12 which is disposed around the pipe and which extracts heat from the pipe. The heat exchange medium may be carbon dioxide, air, water or any other suitable fluid.

The pipe clamp 2 is fixed to the free end of existing pipe and provides in conjunction with the existing pipe, referenced 10, an anchor against which the liner pipe 7 may be pulled. The supporting structure to which the pipe clamp is connected may be tubular in form or may consist of a plurality of arms connecting the pipe clamp 2 and swaging die 3 together.

In operation of the apparatus, a length of liner pipe 7 of polyethylene or other suitable material may be mitred at one end or pre-formed effectively to form a nose cone at that end over which an apertured metal nose cone may be fitted. A ratio of wall thickness to diameter of the liner pipe in the range 10 to 46 is preferred. Holes are punched in the mitre sections which correspond with those in the metal nose cone and through which a cable is connected to the pipe. The cable is threaded through the swaging die 3 and the existing pipeline and connected to some form of pulling device such as a winch appropriately anchored. The electrical supply is switched on to heat the die to the required temperature and the mitred end of the liner pipe is introduced into the upstream end of the die. Tension in the cable is increased to the required value (usually between 45% and 55% of the yield strength of the liner pipe in question and in particular 50%) until the liner pipe begins to move through the die and be pulled into the existing pipeline. The liner pipe is pulled in this may completely through the existing pipe. The cable is released and the memory characteristic of the material of the pipe is then permitted to expand the pipe until it contacts the internal surface of the existing pipe.

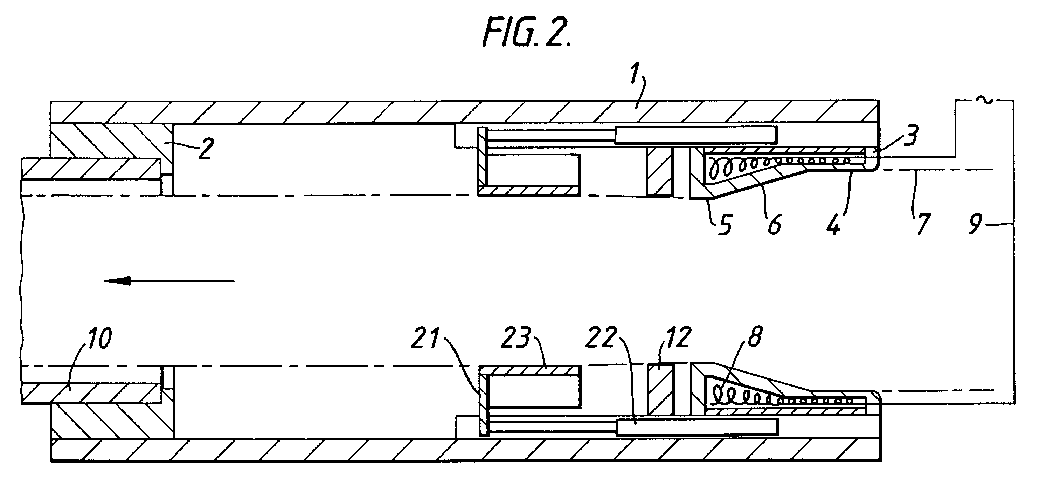

If desired, the pipe may be assisted through the existing pipe by means of a liner pipe pusher machine. Such an arrangement is illustrated in Figure 2 of the drawings. Referring to this figure, the pusher machine, which generally comprises a frame 21, hydraulic cylinder 22, clamp ring 23 and ancillaries is disposed between the swaging die 3 and pipe clamp 2. In operation, this machine pulls the liner pipe through the swaging die 3 and pushes it into the existing pipeline.

The liner pipe may be heated prior to entry into the swaging die stretches as in the manner described in our copending Application GB-A-2186340.

## Claims

1. A method of lining installed pipework which includes the steps of taking a length of liner pipe made from a memory retaining plastics material of external diameter greater than the internal diameter of the pipework to be lined and, using pulling means under tension attached to the leading end of the liner pipe and threaded through the pipework, drawing the liner pipe through a swaging die to reduce the external diameter of the liner pipe, preheating the liner pipe before it emerges from the die, drawing the liner pipe through the installed pipework with its outer diameter reduced to an/or maintained at a dimension less than that of the inner diameter of the pipework and thereafter allowing the liner pipe to expand within the pipework by relaxation of the said tension characterised in that the external diameter of the liner pipe is reduced by up to 15%, the relaxation of the said tension is followed by memory induced expansion at ordinary atmospheric pressure and at the ambient temperature of the pipework (10), the tension applied by the pulling means is such as partially to restrain the radial expansion of the outer surface of the liner pipe after its emergence from the die, the die (3) is attached to but spaced from the pipework (10) and the liner pipe (7) is cooled within the space between the die (3) and the pipework (10) as the liner pipe (7) emerges from the die (3).

2. A method as claimed in claim 1, characterised in that the liner pipe (7) is pre-heated to a temperature between 30°C and 90°C.

3. A method as claimed in claim 2, characterised in that the liner pipe (7) is pre-heated to a temperature of from 30°C to 65°C.

4. A method as claimed in claim 3, characterised in that the liner pipe (7) is pre-heated to a temperature of from 45°C to 55°C.

## Patentansprüche

1. Verfahren zum Auskleiden eines verlegten Rohrwerks, mit den Verfahrensschritten der Anwendung einer Länge eines Auskleidungsrohres aus einem seine Ursprungsform in "Erinnerung" behaltenen Kunststoffmaterial mit einem Außendurchmesser, der größer ist als der Innendurchmesser des auszukleidenden Rohrwerks, der Verwendung einer Zugvorrichtung unter Zugspannung, befestigt am vorderen Ende des Auskleidungsrohres und eingefädelt durch das Rohrwerk hindurch, des Ziehens des Auskleidungsrohres durch eine Ziehmatrize hindurch, um den äußeren Durchmesser des Auskleidungsrohres zu reduzieren, des Vorwärmens des Auskleidungsrohres, bevor es aus der Matrize austritt, des Ziehens des Auskleidungsrohres durch das installierte Rohrwerk hindurch, wobei sein Außendurchmesser reduziert ist und/oder auf einer Abmessung gehalten wird, die geringer ist als diejenige des Innendurchmessers des Rohrwerks, und danach des Erlaubens dem Auskleidungsrohr, sich innerhalb des Rohrwerks durch Nachlassen der genannten Zugspannung auszudehnen, dadurch gekennzeichnet, daß der Außendurchmesser des Auskleidungsrohres um bis zu 15 % reduziert wird, wobei dem Nachlassen der genannten Zugspannung eine durch "Erinnerung" bzw. Rückfederung induzierte Ausdehnung bei normalem atmosphärischem Druck und Umgebungstemperatur des Rohrwerks (10) folgt, wobei die von der Zugvorrichtung aufgebrachte Zugspannung so ist, daß die radiale Ausdehnung der Außenoberfläche des Auskleidungsrohres teilweise zurückgehalten wird, nachdem es aus der Matrize austritt, wobei die Matrize (3) am Rohrwerk (10) befestigt, jedoch im Abstand von diesem angeordnet ist und wobei das Auskleidungsrohr (7) innerhalb des Raumes zwischen der Matrize (3) und dem Rohrwerk (10) gekühlt wird, sobald das Auskleidungsrohr (7) aus der Matrize (3) austritt.

2. Verfahren nach Anspruch 1, dadurch gekennzeichnet, daß das Auskleidungsrohr (7) auf eine Temperatur zwischen 30°C und 90°C vorgewärmt wird.

3. Verfahren nach Anspruch 2, dadurch gekennzeichnet, daß das Auskleidungsrohr (7) auf eine Temperatur von 30°C bis 65°C vorgewärmt wird.

4. Verfahren nach Anspruch 3, dadurch gekennzeichnet, daß das Auskleidungsrohr (7) auf eine Temperatur von 45°C bis 55°C vorgewärmt wird.

## Revendications

1. Procédé de garnissage de tuyauterie installée, comprenant les étapes consistant à prendre une longueur d'un tuyau de garnissage fabriqué à partir d'un matériau en matière plastique à mémoire de forme, tuyau dont le diamètre extérieur est supérieur au diamètre intérieur de la tuyauterie à garnir, utiliser des moyens de traction sous tension fixés à l'extrémité avant du tuyau de garnissage et enfilés sur la tuyauterie, tirer le tuyau de garnissage à travers une étampe afin de réduire le diamètre extérieur du tuyau de garnissage, préchauffer le tuyau de garnissage avant qu'il n'émerge de l'étampe, tirer le tuyau de garnissage à travers la tuyauterie installée, son diamètre extérieur étant réduit ou étant maintenu à une dimension inférieure à celle du diamètre intérieur de la tuyauterie, et permettre consécutivement au tuyau de garnissage de se dilater dans la tuyauterie sous l'effet de la relaxation de ladite tension, caractérisé en ce que le diamètre extérieur du tuyau de garnissage est réduit jusqu'à 15%, la relaxation de ladite tension est suivie par la dilation induite par la mémoire, à la pression atmosphérique normale et à la température ambiante de la tuyauterie (10), la tension appliquée par les moyens de traction est telle qu'elle restreint partiellement la dilatation radiale de la surface extérieure du tuyau de garnissage après son émergence de l'étampe, l'étampe (3) est fixée, mais est tenue écartée de la tuyauterie (10) et le tuyau de garnissage (7) est refroidi dans l'espace compris entre l'étampe (3) et la tuyauterie (10) au moment où le tuyau de garnissage (7) émerge de l'étampe (3).

2. Procédé selon la revendication 1, caractérisé en ce que le tuyau de garnissage (7) est préchauffé à une température comprise entre 30°C et 90°C.

3. Procédé selon la revendication 2, caractérisé en ce que le tuyau de garnissage (7) est préchauffé à une température comprise entre 30°C et 65°C.

4. Procédé selon la revendication 3 caractérisé en ce que le tuyau de garnissage (7) est préchauffé à une température comprise entre 45°C et 55°C.
